# EUROPEAN PATENT APPLICATION

(11) **EP 1 520 618 A2**
(43) Date of publication of application: **06.04.2005**
(21) Application number: 04012984.3
(22) Date of filing: 02.06.2004
(51) Int. Cl.: B01L 3/00

(54) **Device for the even distribution and suction of small quantities of fluids**

(30) Priority: 03.10.2003 IT MI20031900
(71) Applicant: Delta Biologicals S.r.l., 00040 Pomezia (Roma) (IT)
(72) Inventor: Furino, Silvio, 80055 Portici (Napoli) (IT); Cossi, Mario, 00125 Roma (IT); D'Urso, Giulio, 00040 Castel Gandolfo (IT)
(74) Representative: Mayer, Hans Benno, Dipl.-Ing.

(57) **Abstract**

A device for the uniform distribution and suction of small quantities of fluids, with a main line inside the device for the supply and suction of fluid, providing from the main line a first pair of lines that branch off and are arranged in a mirror-like mode with respect to the centerline of the main line, and that from each end of the lines forming the first pair of lines a second pair of lines is branched off , arranged in a mirror-like mode with respect to the center line of the first pair of lines, and that from each end of the lines forming the second pair of lines, third pairs of lines are branched off, arranged in a mirror-like mode with respect to the centerlines of the second pairs of lines and that to the ends of the third pairs of lines are connected in an operating fashion, distribution and suction needles that protrude from the body of the device.

A contact sensor is advantageously connected to each needle of the device so as to activate whenever there is contact with a liquid.

## Description

### Description of the Invention

This invention covers a device for the even distribution and suction of small quantities of fluids.

It is well known by the various sectors of the technology, for instance, by the clinical or diagnostic analysis equipment sector, that there is the need to deposit a large number of small quantities of fluid, for instance, in the honeycomb cells of a plate or dish, to be introduced immediately in well-known analysis equipment or devices to permit, for instance, conducting blood analysis. It is also known that in this sector, there is the need for removing by suction the fluid present, for instance, in the cells of a plate or dish.

At present, in the clinical or diagnostic analysis sector, the distribution of small quantities of fluid, for instance, detergents, thinners or auxiliary fluids, takes place through a distribution device with a main line that acts as manifold for the fluid to be distributed.

Through a main tube, this main line is supplied with the fluid to be distributed and by tubing that acts as a manifold, multiples lines branch off to which are connected small tubes or needles for the final distribution of the fluids to be distributed to numerous cells that are present in the plate or dish that contains the samples to be analyzed.

In the well-known distribution or suction devices, one was able to observe that due to the single line acting as a manifold, from which numerous lines branch off for the distribution/suction of the fluid, there is a considerable difference in velocity and pressure in the fluid to be distributed.

Due to the varying speeds and pressures in the individual fluid distribution lines, the cells may be filled irregularly and may not be filled sufficiently and evenly, which in turn may lead to analyses that are wrong or inaccurate.

The technical problems described until now for the distribution operations of a fluid are also observed in the well-known procedures of removing a fluid through suction, and as such, this invention is not limited only to distribution operations but extends also to "suction" operations.

Therefore, it is the purpose of this invention to propose a new device for the distribution and the suction of small quantities of fluids with which it would be possible to shorten the processing times considerably, permitting at the same time a flow of fluid in the line of the device with even speed and pressure.

Such device must also be capable of checking the distribution level and the presence and absence of a liquid fluid, for instance, in the honeycomb cells of a plate or dish.

Such purpose is achieved according to this invention by the fact that inside the fluid distribution device there is a main line, from which branch off a first pair of lines that are arranged in mirror-like mode with respect to the geometric centerline of the main line, that from each end of the lines forming the first pair of lines a second pair of lines branch off, arranged in a mirror-like mode with respect to the centerlines of the lines forming the first pair, that from each end of the lines forming the second pair of lines, third pairs of lines branch off that are arranged in a mirror-like mode with respect to the centerlines of the second pairs of lines and that to the ends of the third pairs of lines, small distribution tubes are connected in an operating manner that protrude from the body of the device.

Thanks to a series of pairs of lines that are arranged in a mirror-like mode with respect to the common geometric center, a run of even length is achieved for all fluid lines and consequently an extremely quick distribution with even fluid velocities and pressures, that runs at the same time through all final distribution lines.

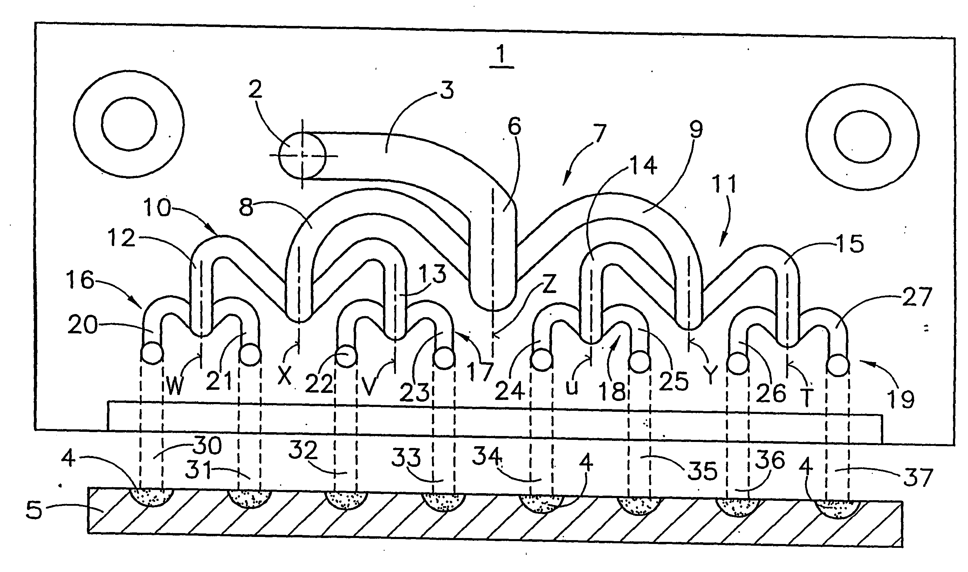

The purpose of this invention will now be described in greater detail and will be illustrated in frontal view through a form of execution provided only as an example in the attached drawing that illustrates a distribution and suction plate or dish of a fluid.

As can be seen from the drawing, the central part of the distribution device, indicated overall as 1, shows a main connection 2 through which, to a supply line 3, a fluid to be distributed is supplied in doses and in small doses, for instance, to the honeycomb cells 4 of a known dish 5 used to conduct medical analyses in special equipment.

As already mentioned above in this description, the distribution of a fluid flowing towards the honeycomb cells 4 will always be mentioned, but obviously, device 1 can also be used for removing a fluid from cells 4 through suction.

In such case, the fluid delivery pump must be replaced by a known suction pump.

End part 6 of supply tube 3 is laid out symmetrically with respect to a centerline identified by Z.

From the end of line 6, a first pair 7 of lines identified by 8 and 9 branch off in a mirror-like mode with respect to centerline Z and look like an arch.

From the ends of lines 8 and 9, pairs 10 and 11 branch off in an arch consisting of the lines identified as 12, 13, 14 and 15.

Each pair 10 of lines 12, 13, is positioned symmetrically and mirror-like with respect to centerline X of line 8 above, while pair 11 of lines 14, 15 is positioned symmetrically and mirror-like with respect to centerline Y of line 9 above.

From the ends of lines 12, 13, 14 and 15, the last pairs 16, 17, 18 and 19 branch off in an arch into lines 20, 21; 22, 23; 24, 25; and 26, 27.

In turn, lines 20, 21 are arranged symmetrically and mirror-like with respect to centerline W of line 12 above; while lines 22, 23 are positioned symmetrically and mirror-like with respect to centerline V of line 13 above.

Lines 24 and 25 are positioned symmetrically and mirror-like with respect to centerline U of line 14 and lines 26 and 27 are positioned symmetrically and mirror-like with respect to centerline T of line 15.

The free ends of lines 20, 21, 22, 23, 24, 25, 26 and 27 are connected for operation to small metal tubes 30, 31, 32, 33, 34, 35, 36 and 37, screwed for instance into the body of device 1 and used to supply fluid in small doses into the honeycomb cells 4 of sample-holding plate or dish 5.

As was already explained above, the small metal tubes 30-37 can be used as supply tubes or by duplicating the lines inside the device as tubes for sucking the fluid out of the honeycomb cells.

It also offers the possibility of providing small supply tubes and small suction tubes coaxially among each other, by connecting the system of supply lines 8-27 to the small feeder tubes 30-37 and by providing lines of an identical system but separate from the one illustrated, to be connected to the small suction tubes.

As particular advantage, main feeder line 3, 6 has the largest diameter. Lines 8, 9 forming the first pair 7 are smaller in diameter than that of line 3; lines 12, 13, 14 and 15 forming the second pairs 10, 11 are smaller in diameter with respect to lines 8 and 9 and finally, the diameters of lines 20, 21, 22, 23, 24, 25, 26 and 27 of the third pairs 16, 17, 18, 19 are smaller than the diameter of lines 12, 13, 14, and 15 above.

Advantageously, small tubes 30, 31, 32, 33, 34, 35, 36 and 37 are made of metal with good electric conductivity and these small tubes are also connected electrically to a sensor (not shown), for the purpose of making certain when small tubes 30, 31, 32, 33, 34, 35, 36 and 37 are in air or when the end parts of such small tubes are in contact with a liquid stored in honeycomb cells 4 of a plate or dish 5. The signal generated by the sensor can be used for instance through an electronic computer or an electronic circuit suitable to detect whether the cells are empty or filled with a liquid; it is also possible to determine the level of the surface of the liquid present inside the honeycomb cells of the dish or plate.

## Claims

1. Device (1) for the even distribution and suction of fluids, with inside the device (1) a main line (2, 3) for the flow of a liquid to be distributed or to be removed by suction, **characterized by** the fact that from the main line (2,3) a first pair (7) of lines (8,9) is branched off, arranged in a mirror-like mode with respect to main centerline (Z) of main line (3), that from each end of lines (8,9) forming the first pair (7) of lines (8,9), a second pair (10,11) of lines (12, 13, 14, 15) is branched off, arranged in a mirror-like mode with respect to centerlines (x, y) of lines (8, 9) of the first pair (7), that from each end of lines (12, 13, 14, 15) forming the second pairs (10, 11) of lines, third pairs of lines (16, 17, 18, 19) are branched off, arranged in a mirror-like mode with respect to centerlines (T, u, v, w) of the second pairs (10, 11) of lines and that to the ends of the third pairs (16, 17, 18, 19) of lines (20, 21; 22, 23; 24, 25; 26, 27) are connected for operation small distribution/suction tubes (30, 31, 32, 33, 34, 35, 36, 37) that protrude from the body of device (1).

2. Device, according to claim 1, **characterized by** the fact that lines (8,9) of the first pair (7) of lines, lines (12, 13, 14 and 15) of the second pairs (10,11) and lines (20, 21, 22, 23, 24, 25, 26 and 27) of the third pairs (16, 17, 18, 19) of lines are arranged in an arch.

3. Device, according to claim 1, **characterized by** the fact that the free ends of lines (20, 21, 22, 23, 24, 25, 26 and 27) are connected for operation to small tubes (30, 31, 32, 33, 34, 35, 36 and 37) hooked up for operation to body (1) of the device and are used to feed the fluid in small doses to the honeycomb cells (4) of dish (5) holding the samples.

4. Device, according to claim 1, **characterized by** the fact that lines (20, 21, 22, 23, 24, 25, 26 and 27) are connected to small tubes (30, 31, 32, 33, 34, 35, 36 and 37) that are connected for operation to the body of device (1) and are used to suck up small quantities of fluid from the honeycomb cells (4) in dish (5) holding the samples.

5. Device, according to claim 1, **characterized by** the fact that small tubes (30, 31, 32, 33, 34, 35, 36 and 37) are connected for operation to a sensor of liquids, used to generate an electric signal when the terminal ends of said small tubes come in contact with the surface of a liquid contained in the honeycomb cells (4) present in the dish (5) holding the samples.
